# EUROPÄISCHE PATENTANMELDUNG

(11) **EP 4 491 468 A1**
(43) Veröffentlichungstag der Anmeldung: **15.01.2025**
(21) Anmeldenummer: 24182472.1
(22) Anmeldetag: 17.06.2024
(51) Int. Cl.: B60T 13/10, B60T 8/88, B60T 13/66, B60T 13/68, B60T 17/22

(54) **VERFAHREN ZUM DETEKTIEREN EINER FEHLFUNKTION EINES VENTILS**

(30) Priorität: 14.07.2023 DE 102023206706
(71) Anmelder: ZF CV Systems Global GmbH, 3006 Bern (CH)
(72) Erfinder: Hauschild, Tobias, 30926 Seelze (DE); Kemmerling, Matthias, 38110 Braunschweig (DE); Brutt, Mirko, 31832 Springe (DE); Rajagopal, Sriganesh, 600061 Chennai (IN)
(74) Vertreter: ZF Friedrichshafen AG

(57) **Zusammenfassung**

Die Erfindung bezieht sich auf ein Verfahren zum Detektieren einer Fehlfunktion eines Ventils (46) einer Bremseinrichtung (10) für eine Arbeitsmaschine, wobei die Bremseinrichtung (10) eine über das Ventil (46) und einen Übertragungsabschnitt (22) betätigbare Bremse aufweist. Das Verfahren umfasst ein Ansteuern (1.1) des Ventils (46) der Bremseinrichtung (10) und ein Ermitteln (11.1) einer Zustandsgröße in dem Übertragungsabschnitt (22). Ferner umfasst das Verfahren ein Vergleichen (III.1) der ermittelten Zustandsgröße mit einer Referenzgröße und ein Detektieren (IV.1) einer Fehlfunktion des Ventils (46) basierend auf einem Ergebnis des Vergleichs.

## Beschreibung

### Technisches Gebiet

Die vorliegende Erfindung bezieht sich auf ein Verfahren zum Detektieren einer Fehlfunktion eines Ventils einer Bremseinrichtung für eine Arbeitsmaschine. Die vorliegende Erfindung bezieht sich zudem auf eine Steuereinrichtung für eine Bremseinrichtung einer Arbeitsmaschine, die eingerichtet ist, um solch ein Verfahren auszuführen, und auf eine Bremseinrichtung mit solch einer Steuereinrichtung.

### Stand der Technik

Bremseinrichtungen für Arbeitsmaschinen, beispielsweise für Anhänger von Arbeitsmaschinen, werden häufig mit pneumatischem Druck betrieben und über Ventile gesteuert. Aus der DE 10 2019 100 869 A1 ist beispielsweise eine Bremseinrichtung zur Steuerung eines Bremsdruckes eines Anhängers einer Arbeitsmaschine bekannt. Die Bremseinrichtungen der Arbeitsmaschinen können dabei zur Steigerung der Sicherheit redundante Komponenten, beispielsweise redundante Ventile, aufweisen. Zur Sicherstellung eines reibungslosen Betriebs ist es erforderlich, dass die Ventile solch einer Bremseinrichtung bestimmungsgemäß funktionieren. Aufgabe der vorliegenden Erfindung war es demnach, ein Verfahren zum Detektieren einer Fehlfunktion eines Ventils einer Bremseinrichtung bereitzustellen.

### Darstellung der Erfindung

Die vorliegende Erfindung bezieht sich auf ein Verfahren zum Detektieren einer Fehlfunktion eines Ventils einer Bremseinrichtung für eine Arbeitsmaschine. Die Arbeitsmaschine kann ein Zugfahrzeug und zusätzlich einen Anhänger aufweisen. Bei dem Zugfahrzeug kann es sich beispielsweise um einen Traktor oder um einen Radlader handeln. Bei dem Anhänger kann es sich um ein Fahrzeug handeln, welches keinen eigenen Antrieb aufweist und von einem weiteren Fahrzeug, beispielsweise dem Zugfahrzeug, gezogen wird. Die Bremseinrichtung kann ausgebildet sein, um eine Bremsung der Arbeitsmaschine, beispielsweise eines Zugfahrzeug und alternativ oder zusätzlich eines Anhänger der Arbeitsmaschine, einzuleiten. Die Bremseinrichtung kann solch ein Bremsen durch pneumatischen Druck, hydraulischen Druck, eine mechanische Komponente, beispielsweise einen Kolben, und/oder eine elektrische Komponente, beispielsweise einen Elektromotor, einleiten. Die Bremseinrichtung kann dazu ausgebildet sein, über eine kabellose Verbindung ein Bremsen einzuleiten. Die Bremseinrichtung kann mit einer Bremse wirkverbunden sein, welche ein Zugfahrzeug und alternativ oder zusätzlich einen Anhänger der Arbeitsmaschine bremsen kann. In einer Ausführungsform ist die Bremseinrichtung in einem Zugfahrzeug der Arbeitsmaschine angeordnet und zum Betätigen einer Bremse eines Anhängers der Arbeitsmaschine ausgebildet. Die Bremseinrichtung ist ausgebildet, um eine Bremse, beispielsweise die oben beschriebene Bremse, über das Ventil und einen Übertragungsabschnitt zu betätigen. Der Übertragungsabschnitt kann ein Abschnitt sein, welcher zwischen dem Ventil und der Bremse eine Wirkverbindung bereitstellt. Der Übertragungsabschnitt kann eine direkte oder indirekte Verbindung zwischen dem Ventil und der Bremse bereitstellen. Der Übertragungsabschnitt kann mechanische, pneumatische oder hydraulische Verbindungselemente, beispielsweise Schläuche oder weitere Ventile, aufweisen. Bei dem Betätigen der Bremse kann es sich um ein Schließen oder ein Öffnen der Bremse handeln.

Das Ventil der Bremseinrichtung kann als Magnetventil, beispielsweise als 3/2-Wege-Magnetventil oder als 2/2-Wege-Magnetventil, ausgebildet sein. Das Ventil kann pneumatisch oder hydraulisch angesteuert werden. Das Ventil kann dazu ausgebildet sein, einen hydraulischen oder einen pneumatischen Druck weiterzuleiten, über den unmittelbar oder mittelbar eine Bremse der Arbeitsmaschine betätigt werden kann. Bei einer Fehlfunktion des Ventils kann es sich um eine eingeschränkte Funktionalität des Ventils handeln, die mit einer Beeinträchtigung der Bremsfunktionalität der Bremseinrichtung einhergehen kann. Eine Fehlfunktion des Ventils kann im Ventil, in der Ansteuerung des Ventils oder in den Leitungen, die zum Ventil hin- und wegführen, verursacht werden. Eine Fehlfunktion des Ventils kann sich darin äußern, dass das Ventil beim Ansteuern nicht ordnungsgemäß reagiert. Eine Fehlfunktion des Ventils kann ein Klemmen, ein Nicht-Öffnen oder Nicht-Schließen des Ventils umfassen. Eine Fehlfunktion des Ventils kann in einer Undichtigkeit des Ventils und alternativ oder zusätzlich einer Leitung, die vom Ventil weg- oder zu diesem hinführt, begründet sein.

Eine Fehlfunktion des Ventils kann sich in einem Durchleiten von zu hohem oder zu geringem Druck oder eines zu hohen oder zu geringen Massenstroms äußern.

Das Verfahren umfasst ein Ansteuern des Ventils der Bremseinrichtung, um das Ventil beispielsweise zu öffnen oder zu schließen. Das Ventil kann beispielsweise elektronisch, mechanisch, pneumatisch oder hydraulisch angesteuert werden. Durch das Ansteuern des Ventils kann ein Verbinden von verschiedenen Ein- und Ausgängen des Ventils eingeleitet werden. Das Ansteuern des Ventils kann in Reaktion auf ein Bremssignal erfolgen, welches von einem Fahrer und alternativ oder zusätzlich durch eine Steuereinrichtung der Arbeitsmaschine ausgelöst werden kann. Ferner umfasst das Verfahren ein Ermitteln, beispielsweise ein Messen, einer Zustandsgröße in dem Übertragungsabschnitt. Die Zustandsgröße kann ein Druck, eine Temperatur, eine Geschwindigkeit, eine Massenstromdichte, eine Dichte, ein Wärmestrom, eine elektrische Kenngröße und/oder eine magnetische Kenngröße sein. Die Zustandsgröße wird in dem Übertragungsabschnitt ermittelt, beispielsweise mittels eines Sensors oder mehrerer Sensoren.

Das Verfahren umfasst einen Schritt des Vergleichens der ermittelten Zustandsgröße mit einer Referenzgröße. Die Referenzgröße kann eine fest definierte oder einstellbare Größe sein. Die Referenzgröße kann einen oberen oder unteren Grenzwert für die Zustandsgröße festlegen, wobei eine Zustandsgröße oberhalb des oberen Grenzwerts oder eine Zustandsgröße unterhalb des unteren Grenzwerts eine Fehlfunktion anzeigen kann. Die Referenzgröße kann auch ein Wertebereich umfassen, wobei eine Zustandsgröße außerhalb des Wertebereichs eine Fehlfunktion anzeigen kann. Das Vergleichen kann ein Feststellen umfassen, ob eine Zustandsgröße größer als, kleiner als oder gleich groß wie die Referenzgröße ist. Das Vergleichen kann ein Subtrahieren der Zustandsgröße von der Referenzgröße, oder der Referenzgröße von der Zustandsgröße umfassen. Das Vergleichen kann ein Bestimmen des Abstands einer Zustandsgröße zur Referenzgröße umfassen. Das Vergleichen kann auch ein Bestimmen eines Ausgangswertes einer Funktion, welche die Zustandsgröße als Eingangswert hat, aufweisen.

Das Verfahren umfasst einen Schritt des Detektierens einer Fehlfunktion des Ventils basierend auf einem Ergebnis des Vergleichs der ermittelten Zustandsgröße mit der Referenzgröße. Das Detektieren kann das Weiterleiten und beispielsweise Ausgeben eines Fehlersignals umfassen. Das Fehlersignal kann an einen Fahrer und alternativ oder zusätzlich an eine Komponente der Arbeitsmaschine, beispielsweise die Steuereinrichtung, weitergeleitet und ausgegeben werden. In Folge des Detektierens kann eine Steuereinrichtung Korrekturmaßnahmen vornehmen, beispielsweise ein Warnsignal ausgeben oder einen Bremsbetrieb anpassen. Das beschriebene Verfahren ermöglicht demnach auf einfache Art und Weise ein Detektieren einer Fehlfunktion eines Ventils einer Bremseinrichtung einer Arbeitsmaschine. Ventile können sicherheitskritische Komponenten einer Bremseinrichtung darstellen. Durch das Vergleichen einer Zustandsgröße in dem Übertragungsabschnitt kann eine Fehlfunktion schnell, präzise und kostengünstig erfasst werden.

Gemäß einer Ausführungsform des Verfahrens weist die Bremseinrichtung ein weiteres Ventil zum Betätigen der Bremse über einen weiteren Übertragungsabschnitt auf. Die eine Bremse kann somit über zwei Ventile betätigt werden. Wenn nur eines der Ventile die Bremse ansteuert, kann die Bremse betätigt werden. Wenn beide Ventile die Bremse ansteuern, kann die Bremse betätigt werden. Der weitere Übertragungsabschnitt kann vollständig oder teilweise separat vom Übertragungsabschnitt ausgebildet sein. Der weitere Übertragungsabschnitt kann jedoch auch teilweise mit dem Übertragungsabschnitt übereinstimmen. Beide Übertragungsabschnitte können also zumindest teilweise einen gemeinsamen Abschnitt aufweisen. Hinsichtlich der Ausgestaltung des weiteren Ventils und des weiteren Übertagungsabschnitts wird auf die obigen Ausführungen zum Ventil und dem Übertragungsabschnitt verwiesen.

Im Rahmen dieser Ausführungsform umfasst das Verfahren einen Schritt des weiteren Ansteuerns des weiteren Ventils der Bremseinrichtung. Das weitere Ansteuern des weiteren Ventils kann unabhängig zum Ansteuern des Ventils erfolgen. Das weitere Ansteuern des weiteren Ventils kann auch mit dem Ansteuern des Ventils gekoppelt sein, beispielsweise diesem entsprechen. Das Verfahren dieser Ausführungsform umfasst ferner einen Schritt des weiteren Ermittelns einer weiteren Zustandsgröße in dem weiteren Übertragungsabschnitt. Das weitere Ermitteln kann gleichzeitig oder zeitlich versetzt zum ersten Ermitteln erfolgen. Das weitere Ermitteln kann mittels derselben oder einer anderen Vorrichtung wie das Ermitteln erfolgen. Die weitere Zustandsgröße kann eine andere als oder dieselbe Zustandsgröße wie die Zustandsgröße sein. Das Verfahren dieser Ausführungsform umfasst ferner einen Schritt des weiteren Vergleichens der ermittelten weiteren Zustandsgröße mit einer Referenzgröße. Das Vergleichen der weiteren Zustandsgröße kann dabei einen anderen Referenzwert oder denselben Referenzwert für den Vergleich heranziehen, wie dies beim Vergleich der Zustandsgröße der Fall ist. Das Verfahren dieser Ausführungsform umfasst ferner einen Schritt des weiteren Detektierens einer Fehlfunktion des weiteren Ventils basierend auf einem Ergebnis des weiteren Vergleichs. Hinsichtlich der möglichen Ausgestaltung des weiteren Ansteuerns, des weiteren Ermittelns, des weiteren Vergleichens und des weiteren Detektierens wird auf die obigen Ausführungen im Zusammenhang mit dem Ansteuern, dem Ermitteln, dem Vergleichen und dem Detektieren verwiesen.

Das Verfahren dieser Ausführungsform ist somit geeignet auch Fehlfunktionen einer Bremseinrichtung mit mindestens zwei Ventilen zu detektieren, die beispielsweise als redundante Ventile ausgeführt sind. Durch zwei Ventile kann ein sicherer Betrieb der Bremseinrichtung gewährleistet werden. Die Bremseinrichtung kann so eingerichtet sein, dass das weitere Ventil eine Bremsfunktion ansteuern kann, falls das erste Ventil eine Fehlfunktion aufzeigt. Die Bremseinrichtung kann auch so eingerichtet sein, dass das erste Ventil eine Bremsfunktion ansteuern kann, falls das weitere Ventil eine Fehlfunktion aufzeigt. Durch das Detektieren einer Fehlfunktion von einem der beiden Ventile kann eine redundante Konfiguration zuverlässig und sicher betrieben werden. Das weitere Ansteuern, weitere Ermitteln, weitere Vergleichen und weitere Detektieren können dabei zusammen mit dem Ansteuern, Ermitteln, Vergleichen und Detektieren in einem einzigen Prüfzyklus ausgeführt werden. Alternativ werden sie in einem eigenen Prüfzyklus ausgeführt, der auf einen Prüfzyklus folgen kann, in welchem die anderen Schritte ausgeführt werden. Ein Prüfzyklus kann immer beim Betätigen einer Parkbremsfunktion ausgeführt werden.

Gemäß einer Ausführungsform des Verfahrens weisen der Übertragungsabschnitt und der weitere Übertragungsabschnitt einen gemeinsamen Übertragungsabschnitt auf. Im Rahmen dieser Ausführungsform werden die Zustandsgröße und die weitere Zustandsgröße in diesem gemeinsamen Übertragungsabschnitt ermittelt. Ein gemeinsamer Abschnitt kann eine pneumatische, hydraulische oder sonstige Leitung aufweisen, mit welcher beide Ventile in Verbindung stehen. Die beiden Übertragungsabschnitte können über ein Wechselventil zusammengeführt werden, um so hinter dem Wechselventil den gemeinsamen Übertragungsabschnitt auszubilden. Wenn die beiden Übertragungsabschnitte vor dem Verbinden mit der Bremse zusammengeführt werden, können diese einen gemeinsamen Übertragungsabschnitt aufweisen. In dem Verfahren dieser Ausführungsform umfassen der Schritt des Ermittelns und der Schritt des weiteren Ermittelns einer Zustandsgröße das Ermitteln einer Zustandsgröße in dem gemeinsamen Übertragungsabschnitt. Der Schritt des Ermittelns und der Schritt des weiteren Ermittelns können zeitgleich oder zeitversetzt erfolgen. Durch das Ermitteln der Zustandsgrößen in dem gemeinsamen Übertragungsabschnitt kann die Bauteilanzahl reduziert werden. Beispielsweise kann hierfür lediglich ein einziger Sensor vorgesehen sein. In einer alternativen Ausführungsform sind der Übertragungsabschnitt und der weitere Übertragungsabschnitt, in denen die Zustandsgröße und die weitere Zustandsgröße ermittelt werden, getrennt voneinander ausgebildet. So können die Größen beispielsweise mittels jeweils einer Sensoreinrichtung direkt hinter dem jeweiligen Ventil ermittelt werden.

Gemäß einer Ausführungsform des Verfahrens erfolgt der Schritt des weiteren Ansteuerns des weiteren Ventils zeitlich nach dem Ansteuern des Ventils. Dabei kann das weitere Ansteuern durchgeführt werden, nachdem das Ansteuern durchgeführt wurde. Das weitere Ansteuern kann aber auch nach dem Anfang des Ansteuerns begonnen werden, aber bevor das Ansteuern nicht mehr durchgeführt wird. Das Ansteuern kann eine vorbestimmte Zeit nach dem ersten Ansteuern erfolgen. Das weitere Ansteuern des weiteren Ventils kann um eine Zeit versetzt nach dem ersten Ansteuern erfolgen, ab welcher eine Wirkung des ersten Ansteuerns zu erwarten ist. Ein weiteres Ansteuern kann um eine Zeit versetzt nach dem ersten Ansteuern erfolgen, ab welcher eine Änderung in der ermittelten Zustandsgröße, beispielsweise ein Druckabfall oder Druckanstieg, zu erwarten ist. Die Zeit zwischen dem Ansteuern und dem weiteren Ansteuern kann 100 bis 1000 Millisekunden betragen. Die Zeit zwischen dem Ansteuern und dem weiteren Ansteuern kann zwischen 0 und 1 Sekunde oder mehr als 1 Sekunde betragen. Durch ein Ansteuern des weiteren Ventils zeitlich nach dem Ansteuern des ersten Ventils kann ermöglicht werden, die Funktionalität der einzelnen Ventile in der Bremseinrichtung zu ermitteln. Eine Änderung der Zustandsgröße kann damit auf jeweils eines der Ventile zurückbezogen werden. Durch ein versetztes Betätigen der Ventile kann somit ein Detektieren einer Fehlfunktion eines individuellen Ventils ermöglicht werden.

Gemäß einer Ausführungsform des Verfahrens umfasst das Detektieren einer Fehlfunktion des Ventils ein Detektieren, ob die ermittelte Zustandsgröße größer als die Referenzgröße ist. Falls eine Zustandsgröße mehrere Dimensionen aufweist, kann ein größer sein ein größer sein als eine einzige oder alle Dimensionen der Zustandsgröße umfassen. Durch ein Detektieren, ob die ermittelte Zustandsgröße größer als eine Referenzgröße ist, wird ein besonders einfaches und zuverlässiges Verfahren zum Detektieren einer Fehlfunktion erreicht. Die Referenzgröße kann der maximale Bremsdruck sein, bei dem eine Bremse geöffnet wird. Wenn die ermittelte Zustandsgröße größer als diese Referenzgröße ist, kann die Bremse nicht geöffnet werden und es besteht eine Fehlfunktion. Durch eine solche Referenzgröße kann besonders zuverlässig eine Fehlfunktion detektiert werden.

Gemäß einer Ausführungsform des Verfahrens umfasst das Ermitteln einer Zustandsgröße in dem Übertragungsabschnitt ein Ermitteln eines Drucks in dem Übertragungsabschnitt. Ein Ermitteln eines Drucks kann über einen Drucksensor erfolgen. Ein Ermitteln über einen Drucksensor kann direkt am Übertragungsabschnitt erfolgen. Ein Ermitteln über einen Drucksensor kann über eine Druckleitung erfolgen, welche mit dem Übertragungsabschnitt in Wirkverbindung steht. Ein Ermitteln eines Drucks kann auch über eine Modellberechnung erfolgen. Ein Ermitteln eines Drucks kann beispielsweise durch ein Ermitteln einer Geschwindigkeit und einer Temperatur erfolgen. Dabei können die Geschwindigkeit und Temperatur Eingangsgrößen eines Berechnungsmodells sein, welches den ermittelten Druck als Ausgangsgröße hat. Ein Druck kann ein Totaldruck, statischer Druck oder dynamischer Druck sein. Ein Druck kann auch ein Partialdruck einer Komponente eines Fluids sein. Durch ein Ermitteln eines Drucks kann die Wirkung eines oder mehrere Ventile auf eine druckgesteuerte Bremse besonders einfach, schnell, genau und zuverlässig ermittelt werden. Ein Detektieren einer Fehlfunktion kann somit besonders einfach, schnell, genau und zuverlässig sein. Ein Ermitteln eines Drucks kann durch Verwendung eines Drucksensors besonders kostengünstig sein, indem beispielsweise auf einen bereits vorhandene Drucksensor der Bremseinrichtung zurückgegriffen wird.

Gemäß einer Ausführungsform des Verfahrens erfolgt das Ermitteln der Zustandsgröße um eine Wartezeit zeitversetzt nach dem Ansteuern. Eine Wartezeit kann zwischen 100 und 1000 Millisekunden lang sein. Eine Wartezeit kann zwischen 0 und 1 Sekunde lang sein oder mehr als 1 Sekunde betragen. Eine Wartezeit kann eine Zeit sein, die zwischen dem Ansteuern und dem Ermitteln der Zustandsgröße verstreicht. Die Zeit zwischen dem Ermitteln und dem Ansteuern kann kürzer sein als die Zeit zwischen einem Ansteuern und einem weiteren Ansteuern. Durch ein zeitliches Versetzen des Ermittelns relativ zum Ansteuern wird ermöglicht, auch zeitversetzte Effekte des Ansteuerns auf die Zustandsgröße zu erfassen. Wenn ein Ansteuern einen Druckabfall über eine Zeit verursacht, kann durch ein zeitlich versetztes Ermitteln eine genauere und relevantere Ermittlung erfolgen. Somit kann das Verfahren in dieser Ausführungsform zuverlässiger ausgestaltet sein und zeitliche Verläufe berücksichtigen.

Gemäß einer Ausführungsform des Verfahrens weist die Bremseinrichtung ein Parkbremsmodul mit dem Ventil zur Parkbremsung der Arbeitsmaschine und ein Betriebsbremsmodul zur Betriebsbremsung der Arbeitsmaschine auf. Das Parkbremsmodul kann mindestens ein Ventil umfassen. Das Parkbremsmodul kann zwei Ventile, beispielsweise das oben beschriebene Ventil und das oben beschriebene weitere Ventil, umfassen, die beispielsweise redundant geschaltet sein können. Ein Parkbremsmodul kann ein Modul der Bremseinrichtung sein, welches dazu ausgebildet ist, eine Parkbremsung einzuleiten. Das Parkbremsmodul kann von einer Steuereinrichtung angesteuert werden. Eine Parkbremse kann ein Wegrollen der Arbeitsmaschine verhindern, wenn diese geparkt ist. Ein Betriebsbremsmodul kann ein Modul der Bremseinrichtung sein, welches dazu ausgebildet ist, eine Betriebsbremsung einzuleiten. Das Betriebsbremsmodul kann von einer Steuereinrichtung angesteuert werden. Eine Betriebsbremse kann eine Bremsung im fahrenden Betrieb der Arbeitsmaschine sein, die beispielsweise durch einen Fahrer über einen Bremshebel oder Bremspedal eingeleitet werden kann. Das Parkbremsmodul und das Betriebsbremsmodul können die gleiche Bremse ansteuern. Das Betriebsbremsmodul kann einen Einfluss auf die ermittelte Zustandsgröße in dem Übertragungsabschnitt haben, diese beispielsweise erhöhen oder verringern.

Das Verfahren dieser Ausführungsform umfasst einen Schritt des Prüfens, ob das Betriebsbremsmodul oberhalb eines Grenzwertes betrieben wird. Das Betreiben des Betriebsbremsmodul oberhalb des Grenzwertes kann damit einhergehen, dass das Betriebsbremsmodul eine Größe oberhalb eines Grenzwerts ausgibt, die beispielsweise einen oberhalb eines Grenzwert liegenden Einfluss auf die Zustandsgröße in dem Übertragungsabschnitt aufweist. Der Grenzwert kann sich auf eine Eingangsgröße oder eine Ausgangsgröße des Betriebsmoduls beziehen. Der Grenzwert kann sich auch auf eine Größe innerhalb des Betriebsbremsmoduls beziehen. Der Grenzwert kann sich auf einen inneren Druck des Betriebsbremsmoduls beziehen. Der Grenzwert kann ein Druck, eine Temperatur, eine Geschwindigkeit, eine Masse, ein Massenstrom und/oder eine weitere Zustandsgröße sein. Durch das Prüfen, ob das Betriebsbremsmodul über einem Grenzwert betrieben wird, kann geprüft werden, ob ein Detektieren einer Fehlfunktion auf Basis der ermittelten Zustandsgröße zuverlässig möglich ist. Wenn das Betriebsbremsmodul einen Einfluss auf die ermittelte Zustandsgröße hat, kann ein Betreiben dessen nämlich die Zustandsgröße in dem Übertragungsabschnitt verfälschen. Durch das Prüfen, ob ein Betriebsbremsmodul oberhalb des Grenzwert betrieben wird, kann demnach ein genaues und sicheres Ermitteln einer Fehlfunktion des Ventils ermöglicht werden. In einer Ausführungsform wird das vorliegende Verfahren nur dann ausgeführt, wenn die Betriebsbremsmodul nicht oberhalb des Grenzwerts betrieben wird.

Die vorliegende Erfindung bezieht sich ferner auf eine Steuereinrichtung für eine Bremseinrichtung einer Arbeitsmaschine, die eingerichtet ist, also spezifisch hergerichtet, beispielsweise programmiert, ist, um das Verfahren nach einer der oben beschriebenen Ausführungsformen auszuführen. Die Steuereinrichtung kann ein Teil der Bremseinrichtung oder separat von dieser vorgesehen sein. Die Steuereinrichtung kann einen oder mehrere Schnittstellen aufweisen, um mit den unterschiedlichen Komponenten der Bremseinrichtung zur Ausführung des Verfahren entsprechend zu kommunizieren, beispielsweise über einen CAN-Bus. Die Steuereinrichtung kann eine oder mehrere Komponenten aufweisen, die an demselben oder an unterschiedlichen Orten vorgesehen sein können. Die vorliegende Erfindung bezieht sich ferner auf eine Bremseinrichtung für eine Arbeitsmaschine mit solch einer Steuereinrichtung. Die Bremseinrichtung kann ein Gehäuse aufweisen, in welchem alle Komponenten der Bremseinrichtung angeordnet sein können. Hinsichtlich der Ausgestaltung und Vorteile der einzelnen Merkmale wird auf die obigen Ausführungen im Zusammenhang mit dem Verfahren zum Detektieren einer Fehlfunktion eines Ventils der Bremseinrichtung verwiesen.

### Kurze Beschreibung der Figuren

Fig. 1 veranschaulicht schematisch eine Bremseinrichtung für eine Arbeitsmaschine gemäß einer Ausführungsform der vorliegenden Erfindung.
Fig. 2 zeigt ein Ablaufdiagramm eines Verfahrens zum Detektieren einer Fehlfunktion eines Ventils der Bremseinrichtung aus Fig. 1 gemäß einer Ausführungsform der vorliegenden Erfindung.
Fig. 3 veranschaulicht schematisch Bremsdruckverläufe und Steuersignale in der Bremseinrichtung aus Fig. 1 beim Ausführen des Verfahrens aus Fig. 2.
Fig. 4 veranschaulicht schematisch weitere Bremsdruckverläufe und Steuersignale in der Bremseinrichtung aus Fig. 1.

### Detaillierte Beschreibung von Ausführungsformen

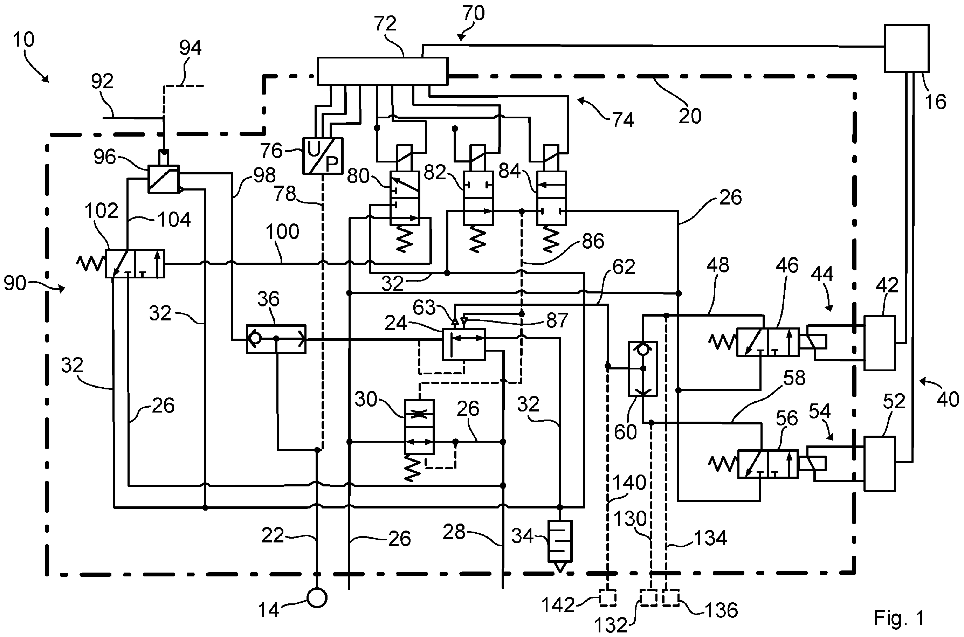

Fig. 1 veranschaulicht schematisch einer Bremseinrichtung 10 für eine Arbeitsmaschine gemäß einer Ausführungsform der vorliegenden Erfindung. Die Bremseinrichtung 10 weist ein Betriebsbremsmodul 70, ein Parkbremsmodul 40, ein Redundanzmodul 90, eine Bremse 14, eine Steuereinrichtung 16 und ein Gehäuse 20 auf. Die Bremse 14 ist dazu ausgebildet, eine Arbeitsmaschine zu bremsen. In der vorliegenden Ausführungsform ist die Bremse 14 in einem Anhänger der Arbeitsmaschine angeordnet und dazu ausgebildet, diesen zu bremsen. Die Bremseinrichtung 10 wird über eine Druckeingangsleitung 26 und eine Druckausgangsleitung 28 mit pneumatischem Druck versorgt. Der pneumatische Druck in der Bremseinrichtung 10 kann über eine Entlüftungsleitung 32 und einen Schalldämpfer 34 abgelassen werden. Das Betriebsbremsmodul 70, das Parkbremsmodul 40 und das Redundanzmodul 90 sind dazu ausgebildet, über die Bremsdruckausgangsleitung 22 die Bremse 14 mit pneumatischem Druck zu betätigen. Die Bremsdruckausgangsleitung 22 bildet zumindest einen Teil eines Übertragungsabschnitts und eines weiteren Übertragungsabschnitts aus.

Die Bremseinrichtung 10 weist des Weiteren ein erstes Relaisventil 24, ein Abrissventil 30 und ein Bremswechselventil 36 auf. Das erste Relaisventil 24 ist dazu ausgebildet, einen Druck an die Bremsdruckausgangsleitung 22 in Abhängigkeit des Betriebsbremsmoduls 70 und des Parkbremsmoduls 40 zu leiten. Das erste Relaisventil 24 leitet einen Druck weiter, wenn das Betriebsbremsmodul 70 einen Druck am Ventil 24 anlegt, und leitet wiederum keinen Druck weiter, wenn das Parkbremsmodul 40 einen Druck am Ventil 24 anlegt. Das Abrissventil 30 verbindet die Druckeingangsleitung 26 mit der Druckausgangsleitung 28 und wird über eine Steuerdruckleitung 86 der Betriebsbremse angesteuert. Es drosselt im Falle einer Leckage im pneumatischen System einen Fluidfluss, um einen plötzlichen Druckabfall zu vermeiden.

Das Parkbremsmodul 40 ist dazu ausgebildet, das erste Relaisventil 24 über einen ersten Eingang 63, ein erstes Parkbremsventil 46 und ein zweites Parkbremsventil 56 anzusteuern und somit eine Parkbremsfunktion bereitzustellen. Das Betriebsbremsmodul 70 ist dazu ausgebildet, das erste Relaisventil 24 über einen zweiten Eingang 87 in Abhängigkeit eines Bremssignals der Arbeitsmaschine anzusteuern, um den Anhänger der Arbeitsmaschine im Betrieb zu bremsen. Zusätzlich ist das Betriebsbremsmodul 70 ausgebildet, um über einen Drucksensor 76 einen Bremsdruck in der Bremsdruckausgangsleitung 22 über eine Sensordruckleitung 78 zu ermitteln. Das Redundanzmodul 90 ist dazu ausgebildet, um über ein Redundanzventil 102 und ein zweites Relaisventil 96 eine redundante Bremsfunktion bereitzustellen. Hierfür ist eine hydraulischen Eingangsleitung 92 vorgesehen, über welche die Bremse 14 im Falle einer Fehlfunktion des Betriebsbremsmoduls 70 angesteuert werden kann.

Die Steuereinrichtung 16 ist dazu ausgebildet, um über eine erste Parksteckerbuchse 42 und eine zweite Parksteckerbuchse 52 das Parkbremsmodul 40 zu steuern. Die Steuereinrichtung 16 ist ferner dazu ausgebildet, um über eine Betriebssteckerbuchse 72 das Betriebsbremsmodul 70 zu steuern. Die Steuereinrichtung 16 ist ferner dazu ausgebildet, um Signale des Drucksensors 76 des Betriebsbremsmodul 70 über die Betriebssteckerbuchse 72 zu empfangen und so einen Druck in der Bremsdruckausgangsleitung 22 zu ermitteln.

Das Parkbremsmodul 40 weist das erste Parkbremsventil 46 und das zweite Parkbremsventil 56 auf, welche parallel geschaltet und jeweils als 3/2-Wege-Magnetschaltventil ausgebildet sind. Das erste Parkbremsventil 46 kann über die erste Parksteckerbuchse 42 und eine erste Ventilelektronik 44 mittels der Steuereinrichtung 16 verstellt werden. Das erste Parkbremsventil 46 ist über eine erste Bremssteuerleitung 48 mit einem Wechselventil 60 des Parkbremsmoduls 40 verbunden. Das zweite Parkbremsventil 56 kann über die zweite Parksteckerbuchse 52 und eine zweite Ventilelektronik 54 mittels der Steuereinrichtung 16 verstellt werden. Das zweite Parkbremsventil 56 ist über eine zweite Bremssteuerleitung 58 mit dem Wechselventil 60 verbunden. Das Wechselventil 60 ist dazu ausgebildet, einen Druck weiterzuleiten, wenn an mindestens einer der ersten Bremssteuerleitung 48 und der zweiten Bremssteuerleitung 58 ein Druck anliegt.

Das erste Parkbremsventil 46 und das zweite Parkbremsventil 56 sind im bestromten Zustand geöffnet und im unbestromten Zustand geschlossen. Wenn das erste Parkbremsventil 46 geöffnet ist, leitet es einen Druck der Druckeingangsleitung 26 an die erste Bremssteuerleitung 48 weiter. Wenn das zweite Parkbremsventil 56 geöffnet ist, leitet es einen Druck der Druckeingangsleitung 26 an die zweite Bremssteuerleitung 58 weiter. Das Wechselventil 60 ist über eine Steuerdruckleitung 62 des Parkbremsmoduls 40 und den ersten Eingang 63 mit dem ersten Relaisventil 24 verbunden. Das erste Relaisventil 24 ist dazu ausgebildet, einen pneumatischen Druck aus der Druckeingangsleitung 26 an das Bremswechselventil 36 weiterzuleiten, wenn am ersten Eingang 63 kein Druck anliegt. Das Bremswechselventil 36 ist dazu ausgebildet, einen Druck an die Bremsdruckausgangsleitung 22 und somit die Bremse 14 weiterzuleiten, wenn an mindestens einem der Eingänge des Bremswechselventils 36 ein Druck anliegt. Das Parkbremsmodul 40 weist somit eine redundante Steuerung der Parkbremsfunktion auf, da im Falle einer Fehlfunktion des Parkbremsventils 46 oder 56 das jeweils andere Parkbremsventil 46 oder 56 weiterhin eine Parkbremsfunktion bereitstellt.

Das Betriebsbremsmodul 70 weist die Betriebssteckerbuchse 72, eine Bremselektronik 74, den Drucksensor 76, ein Vorsteuerventil 80, ein Auslassventil 82 und ein Einlassventil 84 auf. Das Betriebsbremsmodul 70 ist über die Steuerdruckleitung 86 und den zweiten Eingang 87 mit dem ersten Relaisventil 24 verbunden. Das erste Relaisventil 24 ist dazu ausgebildet, einen pneumatischen Druck aus der Druckeingangsleitung 26 an das Bremswechselventil 36 weiterzuleiten, wenn am zweiten Eingang 87 ein Druck anliegt. Das Vorsteuerventil 80 ist als ein 3/2-Wege-Magnetschaltventil ausgebildet. Das Vorsteuerventil 80 ist dazu ausgebildet, im Falle einer Fehlfunktion des Betriebsbremsmoduls 70 einen pneumatischen Druck an das Redundanzmodul 90 weiterzuleiten. In einem bestromten Zustand verbindet es eine Redundanzventilsteuerleitung 100 mit der Entlüftungsleitung 32. In einem unbestromten Zustand verbindet es die Druckeingangsleitung 26 mit der Redundanzventilsteuerleitung 100 und leitet somit einen Druck an das Redundanzventil 102 weiter. Der unbestromte Zustand des Vorsteuerventils 80 kann sich bei einer Fehlfunktion des Betriebsbremsmoduls 70 einstellen.

Das Auslassventil 82 ist als ein 2/2-Wege-Magnetschaltventil ausgebildet. Das Auslassventil 82 ist im unbestromten Zustand geöffnet und im bestromten Zustand geschlossen. Das Einlassventil 84 ist als ein 2/2-Wege-Magnetschaltventil ausgebildet und ist im bestromten Zustand geöffnet und im unbestromten Zustand geschlossen. Das Auslassventil 82 und das Einlassventil 84 sind mit der Druckeingangsleitung 26 und der Entlüftungsleitung 32 verbunden. Das Einlassventil 84 ist dazu ausgebildet, in einem bestromten Zustand einen Druck aus der Druckeingangsleitung 26 über die Steuerdruckleitung 86 an den zweiten Eingang 87 des ersten Relaisventils 24 zu leiten und somit ein Bremsen anzusteuern. Das Auslassventil 82 ist dazu ausgebildet, den Druck der Steuerdruckleitung 86 in einem unbestromten Zustand über die Entlüftungsleitung 32 abzulassen, wenn kein Bremsen mehr angesteuert wird.

Das Redundanzmodul 90 weist die hydraulische Eingangsleitung 92 und eine hydraulische Sensordruckleitung 94 für eine hydraulische Ansteuerung auf. Das Redundanzmodul 90 weist auch das zweite Relaisventil 96, eine Redundanzbremsdruckleitung 98 und das Redundanzventil 102 auf. Das zweite Relaisventil 96 ist über eine Druckleitung 104 des zweiten Relaisventils 96 mit dem Redundanzventil 102 verbunden. Das Redundanzventil 102 ist dazu ausgebildet, in einem mit Druck beaufschlagten Zustand geöffnet zu sein. Dabei leitet es einen Druck aus der Druckeingangsleitung 26 über das Abrissventil 30 an die Druckleitung 104 des zweiten Relaisventils 96 weiter. Das Redundanzventil 102 ist als 3/2-Wege-Ventil ausgebildet. Das Redundanzventil 102 wird über die Redundanzventilsteuerleitung 100 angesteuert, welche mit dem Vorsteuerventil 80 in Verbindung steht. Das Redundanzventil 102 ist dazu ausgebildet, in einem nicht mit Druck beaufschlagten Zustand die Druckleitung 104 über die Entlüftungsleitung 32 zu entlüften.

Das zweite Relaisventil 96 ist dazu ausgebildet, ein hydraulisches Drucksignal durch pneumatischen Druck weiterzuleiten. Der hydraulische Druck wird über die hydraulische Eingangsleitung 92 auf das zweite Relaisventil 96 aufgeprägt. Wenn ein hydraulischer Druck auf das zweite Relaisventil 96 aufgeprägt wird, wird die Druckleitung 104 mit der Redundanzbremsdruckleitung 98 verbunden. Wenn kein hydraulischer Druck aufgeprägt wird, wird die Druckleitung 104 mit der Entlüftungsleitung 32 verbunden. Wenn kein Druck an der Druckleitung 104 des zweiten Relaisventils 96 anliegt, wird kein Druck weitergeleitet. Wenn ein Druck an der Druckleitung 104 des zweiten Relaisventils anliegt, wird der Druck an die Redundanzbremsdruckleitung 98 geleitet. Die Redundanzbremsdruckleitung 98 ist wiederum mit dem Bremswechselventil 36 verbunden. So kann die Bremse 14 über das Redundanzmodul 90 betätigt werden. Damit kann ein Fahrer über die hydraulische Eingangsleitung 92 die Bremse 14 auch im Falle einer Fehlfunktion des Betriebsbremsmoduls 70 betätigen.

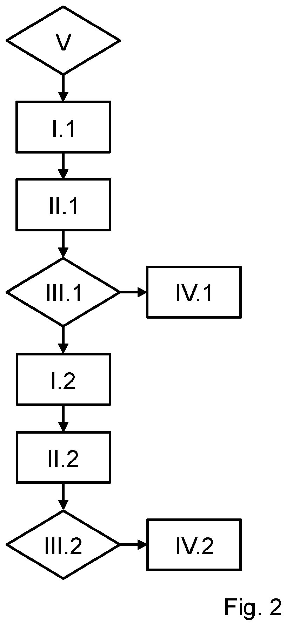

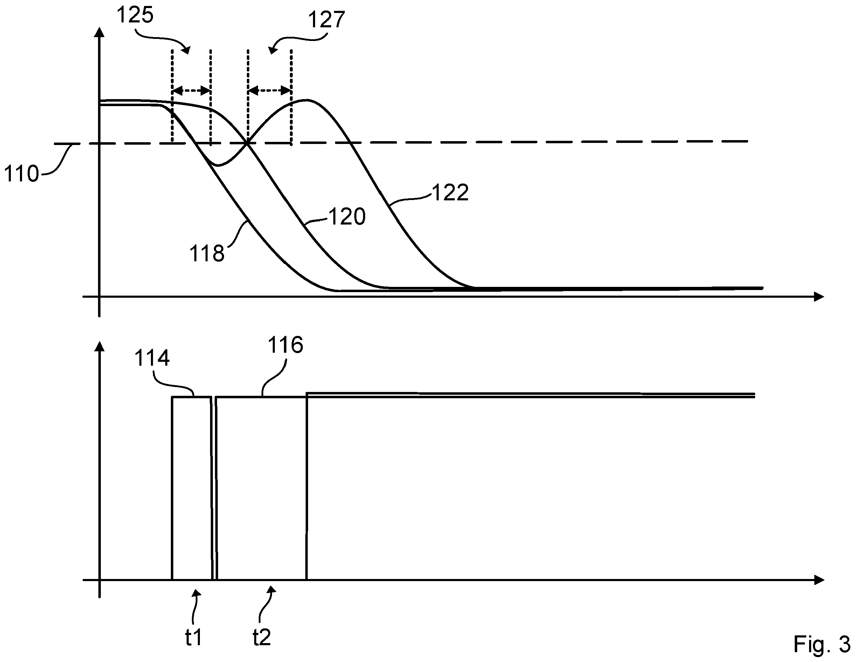

Fig. 2 zeigt ein Ablaufdiagramm eines Verfahrens zum Detektieren einer Fehlfunktion des ersten Parkbremsventils 46 und des zweiten Parkbremsventils 56 der Bremseinrichtung 10 aus Fig. 1 gemäß einer Ausführungsform der vorliegenden Erfindung. Die Steuereinrichtung 16 der Bremseinrichtung 10 ist eingerichtet, um das im Folgenden beschriebene Verfahren auszuführen. Fig. 3 veranschaulicht schematisch Bremsdruckverläufe und Steuersignale in der Bremseinrichtung 10 während des Ausführens der in Fig. 2 dargestellten Verfahrensschritte. Die obere Hälfte der Figur 2 zeigt schematisch drei mögliche Druckverläufe, welche auf der Bremsdruckausgangsleitung 22 anliegen und vom Drucksensor 76 gemessen werden können. Dabei ist entlang der horizontalen Achse die Zeit und entlang der vertikalen Achse der gemessene Druck aufgetragen. Die untere Hälfte der Fig. 2 zeigt schematisch die Steuersignale 114 und 116 des ersten Parkbremsventils 46 und des zweiten Parkbremsventils 56, mit denen die Parkbremsventile 46 und 56 mittels der Steuereinrichtung 16 angesteuert werden.

In einem ersten Schritt 1.1 des in Fig. 2 dargestellten Verfahren wird durch die Steuereinrichtung 16 das erste Parkbremsventil 46 der in Fig. 1 dargestellten Bremseinrichtung 10 angesteuert, wie durch das Steuersignal 114 des ersten Parkbremsventils 46 in dem unteren Diagramm von Fig. 3 ersichtlich. Durch das Ansteuern 1.1 des Ventils 46 wird eine Öffnung des Ventils eingeleitet. Wird das Parkbremsventil 46 hingegen nicht angesteuert, ist dieses geschlossen. Während der Zeitdauer t1 in Fig. 3 wird das Parkbremsventil 46 also angesteuert, anschließend wird das Parkbremsventil 46 nicht mehr angesteuert. Das erste Parkbremsventil 46 wird durch das Ansteuern 1.1 bestromt und geöffnet, womit es zu einem Druckabfall in der Bremsdruckausgangsleitung 22 kommt, sofern keine Fehlfunktion in dem ersten Parkbremsventil 46 vorliegt. Funktioniert das erste Parkbremsventil 46 bestimmungsgemäß, stellt sich ein bestimmungsgemäßer Bremsdruckverlauf 118, der in Fig. 3 dargestellt ist, ein.

In Fig. 3 ist ferner ein erster fehlerhafter Bremsdruckverlauf 120 gezeigt, welcher einen möglichen Bremsdruckverlauf bei einer Fehlfunktion des ersten Parkbremsventil 46 darstellt. Das Parkbremsventil 46 wird in beiden Fällen gleich angesteuert. Beim ersten fehlerhaften Bremsdruckverlauf 120 bleibt der Bremssteuerdruck jedoch zunächst im Wesentlichen unverändert und sinkt nicht ab, wie es im Fall des fehlerfreien Bremsdruckverlaufs 118 der Fall ist. Die zugrundeliegende Fehlfunktion kann zum Beispiel ein defektes Ventil, aber auch eine defekte erste Ventilelektronik 44 oder erste Bremssteuerleitung 48 sein. Auf Grund der Fehlfunktion wird kein Druck über das Wechselventil 60 an das erste Relaisventil 24 geleitet, wodurch der Bremsdruck nicht sinkt und die Bremse 14 nicht gelöst wird.

Nach einer ersten Wartezeit 125 wird ein Schritt des Ermitteln 11.1 einer Zustandsgröße durchgeführt, wobei die Zustandsgröße der Druck entlang der Bremsdruckausgangsleitung 22 ist, welcher in der vorliegenden Ausführungsform über den Drucksensor 76 ermittelt wird. Falls keine Fehlfunktion des Parkbremsventils 46 vorliegt, fällt während der ersten Wartezeit 125 der Druck unter den in Fig. 3 gezeigten Referenzwert 110 ab. Folglich wird in einem Folgeschritt III.1 die ermittelte Zustandsgröße, also der Druck in der Bremsdruckausgangsleitung 22, mit dem Referenzwert 110 verglichen. Falls der Vergleich III.1 zu dem Ergebnis führt, dass der in Schritt 11.1 ermittelte Druck über dem Referenzwert 110 liegt, wird in einem Folgeschritt IV.1 eine Fehlfunktion des ersten Ventils durch die Steuereinrichtung 16 detektiert. In dem Fall sendet die Steuereinrichtung 16 im Schritt IV.1 ein Signal an den Fahrer und informiert diesen über die detektierte Fehlfunktion des Parkbremsventils 46. Liegt der ermittelte Druck unterhalb des Referenzwerts 110, wird in Schritt IV.1 festgestellt, dass das Parkbremsventil 46 bestimmungsgemäß funktioniert.

Anschließend wird in Schritt IV.1 nach einer ersten Zeit t1, ausgehend vom Beginn des Ansteuerns 1.1 des ersten Ventils 46, ein weiteres Ansteuern I.2 des zweiten Ventils durchgeführt. Zu Beginn des Ansteuerns I.2 des zweiten Ventils 56 wird das erste Ventil 46 vorliegend nicht mehr angesteuert, weshalb dieses geschlossen ist. Die Steuereinrichtung 16 öffnet das zweite Parkbremsventil 56 entsprechend der obigen Beschreibung zum ersten Parkbremsventil 46, wodurch der Druck an der Bremsdruckausgangsleitung 22 wie oben beschrieben weiter entlang des fehlerfreien Bremsdruckverlaufs 118 abfällt, falls keine Fehlfunktion in dem zweiten Parkbremsventil 56 vorliegt. Ist das erste Parkbremsventil 46 hingegen fehlerhaft gewesen, sodass sich der erste fehlerhafte Bremsdruckverlauf 120 eingestellt hat, fällt der Druck bei fehlerfreiem zweiten Parkbremsventil 56 entlang des Verlauf 120 ab, wie in Fig. 3 dargestellt. Ist hingegen lediglich das zweite Parkbremsventil 56 fehlerhaft, so steigt der Druck von dem Verlauf 118 an, um nun dem zweiten fehlerhaften Bremsdruckverlauf 122 in Fig. 3 zu folgen. Der zweite fehlerhafte Bremsdruckverlauf 122 folgt anfänglich dem fehlerfreien Bremsdruckverlauf 118, bis er wie oben beschrieben gegenüber diesem ansteigt.

Nach einer zweiten Wartezeit 127, ausgehend vom weiteren Ansteuern I.2 des zweiten Parkbremsventils 56, wird daher nun ein Schritt des weiteren Ermittelns II.2 einer weiteren Zustandsgröße durchgeführt. Die weitere Zustandsgröße ist dabei der Druck entlang der Bremsdruckausgangsleitung 22, welcher ebenfalls über den Drucksensor 76 ermittelt wird. Falls keine Fehlfunktion des zweiten Parkbremsventils 56 vorliegt, bleibt oder fällt während der zweiten Wartezeit 127 der Druck unter den Referenzwert 110. Dies entspricht dem fehlerfreien Bremsdruckverlauf 118 oder dem Bremsdruckverlauf 120. Andernfalls steigt der Druck nun gemäß des Verlaufs 122 über den Referenzwert 110. Deshalb wird ein Schritt des weiteren Vergleichens III.2 der ermittelten Zustandsgröße durchgeführt, bei dem der ermittelte Druck mit dem Referenzwert 110 verglichen wird. Falls der ermittelte Druck über dem Referenzwert 110 liegt, wird in einem Folgeschritt IV.2 eine Fehlfunktion des zweiten Parkbremsventils 56 durch die Steuereinrichtung 16 detektiert und entsprechend der obigen Beschreibung an den Fahrer ausgegeben. Andernfalls wird festgestellt, dass keine Fehlfunktion in dem zweiten Parkbremsventil 56 vorliegt.

Nach einer zweiten Zeit t2 ausgehend vom weiteren Ansteuern I.2 des zweiten Parkbremsventils 56 wird das erste Parkbremsventil 46 wieder angesteuert, womit beide Parkbremsventile 46 und 56 geöffnet sind und eine Parkbremsfunktion gelöst wird.

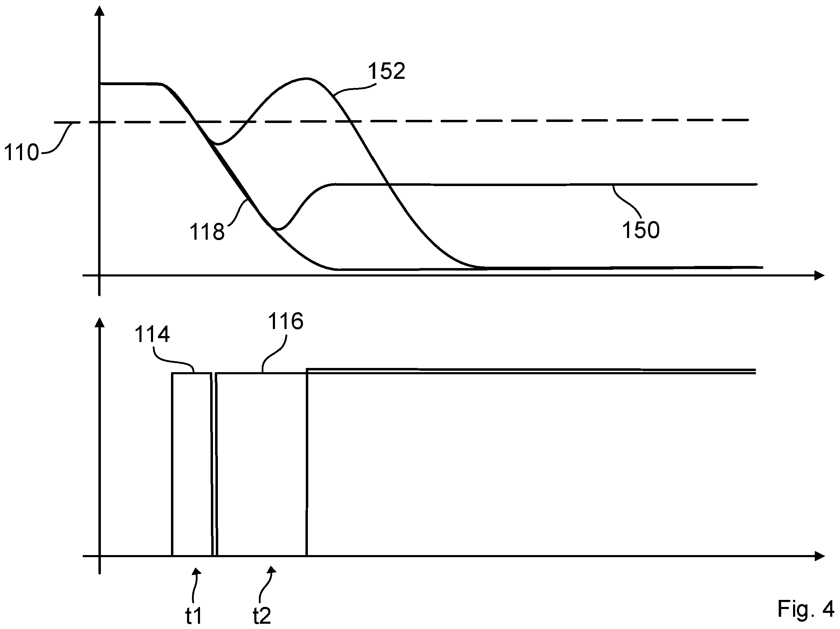

In der vorliegenden Ausführungsform erfolgt vor der Funktionsprüfung der Parkbremsventile 46 und 56, die mit dem Ansteuern 1.1 des ersten Parkbremsventils 46 beginnt, ein Prüfschritt V, ob das Betriebsbremsmodul 70 oberhalb eines Grenzwerts betrieben wird. In der vorliegenden Ausführungsform wird dabei geprüft, ob das Betriebsbremsmodul 70 einen Druck oberhalb eines Grenzwerts auf die Bremsdruckausgangsleitung 22 appliziert. Solch ein durch das Betriebsbremsmodul 70 angelegter Druck könnte das Detektieren IV einer Fehlfunktion des ersten Parkbremsventils 46 oder des zweiten Parkbremsventils 56 verfälschen. Demnach wird das Verfahren der vorliegenden Ausführungsform nur dann ausgeführt, wenn das Betriebsbremsmodul 70 nicht oberhalb des Grenzwerts betrieben wird. Wie aus Fig. 4 ersichtlich, kann durch das Betätigen des Betriebsbremsmoduls 70 Einfluss auf den Druckverlauf in der Bremsdruckausgangsleitung 22 genommen werden, wie durch die Verläufe 150 und 152 dargestellt. Die Abweichungen der Verläufe 150 und 152 von dem Druckverlauf 118 werden hier durch das Betätigen des Betriebsbremsmoduls 70 hervorgerufen. Fig. 4 ist sonst entsprechend den obigen Ausführungen zu Fig. 3 aufgebaut.

In einer alternativen Ausführungsform weist das Parkbremsmodul 40 eine Steuerdrucksensorleitung 140 und einen Steuerdrucksensor 142 auf, welche in Fig. 1 gestrichelt dargestellt sind. Der Steuerdrucksensor 142 misst über der Steuerdrucksensorleitung 140 den Steuerdruck auf der Steuerdruckleitung 62. Somit kann ein Druck ermittelt werden, welcher nicht durch das Betriebsbremsmodul 70 oder das Redundanzmodul 90 beeinflusst wird. Damit können Störungen dieser Komponenten beim Detektieren einer Fehlfunktion des ersten Parkbremsventils 46 oder des zweiten Parkbremsventils 56 vermieden werden. Ansonsten entspricht diese alternative Ausführungsform der eingangs in Zusammenhang mit Fig. 1 beschriebenen Ausführungsform. Ferner kann das Verfahren aus Fig. 2 entsprechend der obigen Ausführungen auch in dieser alternativen Ausführungsform ausgeführt werden.

In einer alternativen Ausführungsform weist das Parkbremsmodul 40 eine erste Parkbremssensorleitung 130, einen ersten Parkbremsdrucksensor 132, eine zweite Parkbremssensorleitung 134 und einen zweiten Parkbremsrucksensor 136 auf. Diese sind in Fig. 1 gestrichelt dargestellt. Der erste Parkbremsdrucksensor 132 misst über die erste Parkbremssensorleitung 130 den über das erste Parkbremsventil 46 geleiteten Druck. Der zweite Parkbremsdrucksensor 136 misst über die zweite Parkbremssensorleitung 134 den über das zweite Parkbremsventil 56 geleiteten Druck. Somit können zwei separate Drücke vor einem Zusammenführen über das Wechselventil 60 ermittelt werden. Durch einen Vergleich der beiden ermittelten Drücke mit einem Referenzwert 110 kann somit eine Fehlfunktion des ersten Parkbremsventils 46 oder des zweiten Parkbremsventils 56 ermittelt werden. Damit wird ein Detektieren einer Fehlfunktion auch ermöglicht, wenn beide Parkbremsventile 46 und 56 gleichzeitig angesteuert werden. Der erste Parkbremsdrucksensor 132 und der zweite Parkbremsdrucksensor 136 sind mit der Steuereinrichtung 16 verbunden. Ansonsten entspricht diese alternative Ausführungsform der eingangs in Zusammenhang mit Fig. 1 beschriebenen Ausführungsform. Ferner kann das Verfahren aus Fig. 2 entsprechend der obigen Ausführungen auch in dieser alternativen Ausführungsform ausgeführt werden.

### Bezugszeichen

- 10: Bremseinrichtung
- 14: Bremse
- 16: Steuereinrichtung
- 20: Gehäuse
- 22: Bremsdruckausgangsleitung
- 24: Erstes Relaisventil
- 26: Druckeingangsleitung
- 28: Druckausgangsleitung
- 30: Abrissventil
- 32: Entlüftungsleitung
- 34: Schalldämpfer
- 36: Bremswechselventil
- 40: Parkbremsmodul
- 42: Erste Parksteckerbuchse
- 44: Erste Ventilelektronik
- 46: Erstes Parkbremsventil
- 48: Erste Bremssteuerleitung
- 52: Zweite Parksteckerbuchse
- 54: Zweite Ventilelektronik
- 56: Zweites Parkbremsventil
- 58: Zweite Bremssteuerleitung
- 60: Wechselventil
- 62: Steuerdruckleitung
- 63: Erster Eingang
- 70: Betriebsbremsmodul
- 72: Betriebssteckerbuchse
- 74: Bremselektronik
- 76: Drucksensor
- 78: Sensordruckleitung
- 80: Vorsteuerventil
- 82: Auslassventil
- 84: Einlassventil
- 86: Steuerdruckleitung
- 87: Zweiter Eingang
- 90: Redundanzmodul
- 92: Hydraulische Eingangsleitung
- 94: Hydraulische Sensordruckleitung
- 96: Zweites Relaisventil
- 98: Redundanzbremsdruckleitung
- 100: Redundanzventilsteuerleitung
- 102: Redundanzventil
- 104: Druckleitung
- 110: Referenzwert
- 114: Steuersignal des ersten Parkbremsventils
- 116: Steuersignal des zweiten Parkbremsventils
- 118: Fehlerfreie Bremsdruckverlauf
- 120: Erster fehlerhafter Bremsdruckverlauf
- 122: Zweiter fehlerhafter Bremsdruckverlauf
- 125: erste Wartezeit
- 127: zweite Wartezeit
- 130: Erste Parkbremssensorleitung
- 132: Erster Parkbremsdrucksensor
- 134: Zweite Parkbremssensorleitung
- 136: Zweiter Parkbremsdrucksensor
- 140: Steuerdrucksensorleitung
- 142: Steuerdrucksensor
- 150: Vierter Bremsdruckverlauf
- 152: Fünfter Bremsdruckverlauf
- I.1: Ansteuern des Ventils
- I.2: Ansteuern des weiteren Ventils
- 11.1: Ermitteln einer Zustandsgröße
- II.2: Ermitteln einer weiteren Zustandsgröße
- III.1: Vergleichen der ermittelten Zustandsgröße
- III.2: Vergleichen der ermittelten weiteren Zustandsgröße
- IV.1: Detektieren einer Fehlfunktion des Ventils
- IV.2: Detektieren einer Fehlfunktion des weiteren Ventils
- V: Prüfen Betrieb Betriebsbremsmodul
- t1: Erste Zeit
- t2: Zweite Zeit

## Patentansprüche

1. Verfahren zum Detektieren einer Fehlfunktion eines Ventils (46) einer Bremseinrichtung (10) für eine Arbeitsmaschine, wobei die Bremseinrichtung (10) eine über das Ventil (46) und einen Übertragungsabschnitt betätigbare Bremse (14) aufweist, umfassend ein Ansteuern (1.1) des Ventils (46) der Bremseinrichtung (10), ein Ermitteln (11.1) einer Zustandsgröße in dem Übertragungsabschnitt (22), ein Vergleichen (III.1) der ermittelten Zustandsgröße mit einer Referenzgröße, und ein Detektieren (IV.1) einer Fehlfunktion des Ventils (46) basierend auf einem Ergebnis des Vergleichs.

2. Verfahren nach Anspruch 1, **dadurch gekennzeichnet, dass** die Bremseinrichtung (10) ein weiteres Ventil (56) zum Betätigen der Bremse (14) über einen weiteren Übertragungsabschnitt (22) aufweist, und dadurch, dass das Verfahren ein weiteres Ansteuern (I.2) des weiteren Ventils (56) der Bremseinrichtung (10), ein weiteres Ermitteln (II.2) einer weiteren Zustandsgröße in dem weiteren Übertragungsabschnitt (22), ein weiteres Vergleichen (III.2) der ermittelten weiteren Zustandsgröße mit einer Referenzgröße, und ein weiteres Detektieren (IV.2) einer Fehlfunktion des weiteren Ventils (56) basierend auf einem Ergebnis des weiteren Vergleichs (III.2) aufweist.

3. Verfahren nach Anspruch 2, **dadurch gekennzeichnet, dass** der Übertragungsabschnitt und der weitere Übertragungsabschnitt einen gemeinsamen Übertragungsabschnitt (22) aufweisen, und dadurch, dass das Ermitteln (II.1) und das weitere Ermitteln (II.2) einer Zustandsgröße ein Ermitteln (II.1, II.2) einer Zustandsgröße in dem gemeinsamen Übertragungsabschnitt (22) aufweisen.

4. Verfahren nach Anspruch 2 oder 3, **dadurch gekennzeichnet, dass** das weitere Ansteuern (I.2) des weiteren Ventils (56) zeitlich nach dem Ansteuern (1.1) des Ventils (46) erfolgt.

5. Verfahren nach einem der vorhergehenden Ansprüche, **dadurch gekennzeichnet, dass** das Detektieren (IV.1; IV.2) einer Fehlfunktion des Ventils (46, 56) ein Detektierten umfasst, ob die ermittelte Zustandsgröße größer als die Referenzgröße ist.

6. Verfahren nach einem der vorhergehenden Ansprüche, **dadurch gekennzeichnet, dass** das Ermitteln (11.1; II.2) einer Zustandsgröße in dem Übertragungsabschnitt (22) ein Ermitteln eines Drucks in dem Übertragungsabschnitt (22) umfasst.

7. Verfahren nach einem der vorhergehenden Ansprüche, **dadurch gekennzeichnet, dass** das Ermitteln (11.1; II.2) der Zustandsgröße um eine Wartezeit (125; 127) zeitversetzt nach dem Ansteuern (1.1; I.2) erfolgt.

8. Verfahren nach einem der vorhergehenden Ansprüche, **dadurch gekennzeichnet, dass** die Bremseinrichtung (10) ein Parkbremsmodul (40) mit dem Ventil (46) zur Parkbremsung der Arbeitsmaschine und ein Betriebsbremsmodul (70) zur Betriebsbremsung der Arbeitsmaschine aufweist, und dadurch, dass das Verfahren ein Prüfen (V) umfasst, ob das Betriebsbremsmodul (70) oberhalb eines Grenzwertes betrieben wird.

9. Steuereinrichtung (16) für eine Bremseinrichtung (10) einer Arbeitsmaschine, die eingerichtet ist, um ein Verfahren nach einem der vorhergehenden Ansprüche durchzuführen.

10. Bremseinrichtung (10) für eine Arbeitsmaschine mit einer Steuereinrichtung (16) nach Anspruch 9.
